# EUROPÄISCHE PATENTANMELDUNG

(11) **EP 4 559 654 A1**
(43) Veröffentlichungstag der Anmeldung: **28.05.2025**
(21) Anmeldenummer: 24214810.4
(22) Anmeldetag: 22.11.2024
(51) Int. Cl.: B29B 17/04, C08J 11/12

(54) **VERFAHREN ZUR AUFBEREITUNG VON CARBONFASERVERSTÄRKTEN KUNSTSTOFFEN**

(30) Priorität: 23.11.2023 DE 102023132759
(71) Anmelder: Pyrum Innovations International S.A., 5445 Schengen (LU)
(72) Erfinder: Niels, Ellermann, 66763 Dillingen (DE)
(74) Vertreter: Patentanwaltskanzlei Vièl & Wieske PartGmbB

(57) **Zusammenfassung**

Die vorliegende Erfindung betrifft eine Vorrichtung und ein Verfahren zur Aufbereitung von carbonfaserverstärkten Kunststoffen (CFK), insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen. Die carbonfaserverstärkten Kunststoffe durchlaufen in einer ersten elektrisch beheizbaren Förderschnecke eine Pyrolyse.

## Beschreibung

Die vorliegende Erfindung betrifft eine Vorrichtung und ein Verfahren zur Aufbereitung von carbonfaserverstärkten Kunststoffen, insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen.

Faserverbundwerkstoffe bilden eine Untergruppe der Verbundwerkstoffe, bei denen eingearbeitete Fasern Kunststoffe verstärken, um die mechanischen Eigenschaften der Kunststoffe zu verbessern. Die Fasern können dabei beispielsweise die Zugfestigkeit von Bauteile erhöhen. Die Fasern können Glasfasern, Carbonfasern, Aramidfasern, Polyesterfasern, Naturfasern oder metallische Fasern sein, die in eine Kunststoffmatrix eingebracht werden. Obwohl die größten Veränderungen der mechanischen Eigenschaften mit isotropen, endlosen Fasern erzielt werden, zeigen sich mechanische Verbesserungen bereits mit anisotropen Fasern mit einer Länge von 1 mm.

Ein Beispiel für Faserverbundwerkstoffe sind carbonfaserverstärkte Kunststoffe (CFK). Carbonfasern bestehen hauptsächlich aus Kohlenstoff mit Spurenverunreinigungen anderer Elemente. Die industrielle Herstellung kann aus den Ausgangsmaterialien Polyacrylnitril (PAN), Cellulose und Pech erfolgen. Für die Herstellung wird ein hoher Energiebedarf benötigt. Die Carbonfasern können dabei zur besseren Haftung an der Kunststoffmatrix oberflächenbehandelt werden.

Die Kunststoffmatrixmaterialien werden in Duroplaste und Thermoplaste unterteilt. Die besten mechanischen Eigenschaften werden bei der Verwendung von Carbonfasern und Duroplasten erzielt. Als duroplastische Kunststoffmatrixmaterialien kommen beispielsweise ungesättigte Polyesterharze, Vinylesterharze, Methyl-Methacrylatharze, Epoxidharze, Polyurethan, Phenol-Formaldehydharze oder Aminoharze in Frage.

Carbonfaserverstärkte Kunststoffe werden beim Automobilbau, in der Luftfahrt, bei der Herstellung von Rotorblättern für Windkraftanlagen, aber auch in Alltagsgegenständen, beispielsweise bei Fahrradrahmen oder im Freizeitbereich, eingesetzt. Diese carbonfaserverstärkte Kunststoffe ersetzen im Leichtbau Materialien wie beispielsweise Stahl oder Aluminium. Problematisch dabei ist, dass im Gegensatz zu metallischen Rohstoffen das Recycling von carbonfaserverstärkten Kunststoffen aufwendig ist und bisher nicht die gleichen Recyclingquoten erreicht. Besonders problematisch bei der Verwendung carbonfaserverstärkter Kunststoffe in Alltagsgegenständen ist, dass diese bei sachgemäßer Entsorgung zum Teil in Müllverbrennungsanlagen verbrannt werden. Sie können dabei wegen ihres hohen Heizwertes die Abgastemperaturen stark erhöhen und geben bei der Verbrennung große Mengen Kohlenstoffdioxid ab. Die bei der Verbrennung entstehenden Faserstäube können die Filteranlagen zusetzten oder Kurzschlüsse in Elektroentstaubern verursachen. Aber auch durch End-of-Life-Produkte (Produkte, deren Lebensdauer erreicht ist) und Produktionsabfälle, beispielsweise durch Zuschnitt, fallen CFK-Abfälle an. Der Abfallmassenstrom steigt infolge von weltweit steigenden CFK-Produktionsmengen an.

Es besteht ein steigender Bedarf, die Fasern aus Verbundwerkstoffabfällen zurückzugewinnen, um zur Entlastung der Umwelt die energieaufwendig herzustellenden Carbonfasern zu substituieren. Diese recycelten Carbonfasern (rCF) eigen sich in vielen Anwendungsbereichen als Ersatz zu neu hergestellten Carbonfasern.

Die recycelten Carbonfasern können je nach ihrer Qualität, die maßgeblich von etwaigen Faserbeschädigungen und Ablagerungen auf der Oberfläche charakterisiert wird, durch unterschiedliche Aufbereitungsschritte als Ausgangsstoff von neuen Produkten verwendet werden. Bei dem Recycling der Carbonfasern aus dem Verbundwerkstoff werden prozessbedingt endliche Fasern zurückgewonnen. Diese endlichen Fasern können in unterschiedlichen Verfahren, beispielsweise Formpressen, Spritzgießen, Vliesherstellung, Tapeherstellung, Garnherstellung, Organoblechformung und Carbonfaserpapierherstellung zur Produktherstellung genutzt werden.

Es sind verschiedene Verfahren zum Recycling von CFK bekannt. Dazu gehören beispielsweise die mechanische Trennung, Wirbelschichtbefeuerung, Solvolyse, Katalyse, elektrodynamische Fragmentierung, biologische Verfahren, die Verwendung von Salzbädern, Thermoschockbehandlung und Pyrolyse.

Pyrolyseverfahren zur Erzeugung wiederverwendbarer Carbonfasern sind aus dem Stand der Technik bekannt.

Die DE 10 2016 113 777 A1 betrifft ein Verfahren zum Aufbereiten von carbonfaserverstärkten Kunststoffen. Dabei werden die carbonfaserverstärkten Kunststoffteile mit einer Atmosphäre in Kontakt gebracht und einer Wärmebehandlung unterzogen. Die Atmosphäre weist dabei ein gasförmiges sauerstoffübertragendes Oxidationsmittel auf und ist frei von elementarem Sauerstoff. Die Wärmebehandlung wird bei Temperaturen zwischen 400°C und 1500°C durchgeführt.

Die EP 2 783 824 B1 offenbart ein mehrstufiges pyrolytisches Verfahren zur Rückgewinnung von Kohlenstofffasern aus kohlenstofffaserhaltigen Kunststoffen. Die Pyrolyse erfolgt in einer Pyrolysevorrichtung mit zwei Pyrolysezonen. Der Sauerstoffgehalt ist in der zweiten Pyrolysezone um 3 Vol.-% bis 15 Vol.-% größer als in der ersten Pyrolysezone, wobei die Temperatur in der zweiten Pyrolysezone 25°C bis 300°C höher ist als in der ersten Pyrolysezone. Nachteilig hieran ist, dass die Kohlenstofffasern durch den Sauerstoffgehalt in beiden Pyrolysezonen durch Oxidation beschädigt werden können.

Nachteilig an den bekannten Verfahren ist, dass lediglich die Carbonfasern recycelt werden. Das bedeutet, dass abhängig von dem zu recycelnden carbonfaserverstärkten Kunststoff der Anteil der Kunststoffmatrix nicht weiterverarbeitet, sondern unkontrolliert abgebrannt wird. Insbesondere bei Verschnitt aus Randteilen von carbonfaserverstärkten Bauteilen kann der Kunststoffmatrixanteil überwiegen. Des Weiteren ist bedingt durch den technischen Aufbau des rekuperativen Wärmeeintrags mittels Abgasmassenstrom die Einstellung einer gezielten Atmosphäre sowie exakt definierter Temperaturprofile nur bedingt umsetzbar.

Die Patentschrift US 11,578,271 B1 betrifft ein Verfahren und eine Vorrichtung zur Gewinnung von Kohlenstofffasern aus kohlenstofffaserhaltigem Abfall. Für das Verfahren und die Vorrichtung kann abhängig vom Abfallmaterial entweder eine sauerstofffreie Atmosphäre, zur Austreibung flüchtiger Komponenten im Epoxidharz- oder andere Kunststoffmatrix oder eine Reaktoratmosphäre mit 1 Vol.-% bis 2 Vol.-% Sauerstoff eingestellt werden. Die Pyrolyse erfolgt in einer rotierenden Reaktortrommel ähnlich einem Drehrohrofens, aber im Gegensatz dazu Einbauten an der Reaktorinnenwand aufweist. Nachteilig hieran ist, dass die Trennung der Fasern von der Matrix in einem einzigen Reaktorraum mit gleichbleibenden und nicht genau kontrollierbaren Prozessbedingungen erfolgt, wobei die gewonnenen Fasern, der Pyrolysedampf und das Pyrolyseöl schwankende Eigenschaften hat. Die Vorrichtung weist einen Schneckenförderer auf, der zum horizontalen Eintrag in den Reaktor verwendet wird. Zur Fortbewegung der Abfälle aus kohlenstofffaserverstärktem Kunststoff im Reaktor ist die Reaktortrommel geneigt, wobei die Eintragsseite in vertikaler Ausrichtung höher als die Austragsseite des Reaktors ist und somit die kohlenstofffaserverstärkten Kunststoffe bedingt durch die Drehbewegung der Reaktortrommel und der mit Hilfe der Neigung wirkenden Schwerkraft vom Eintragsbereich zum Austragsbereich des Reaktors gelangen. Nachteilig hieran ist, dass durch die Einbauten im Reaktor die carbonfaserverstärkten Kunststoffe nicht kontinuierlich und gleichmäßig im Reaktor erfasst und weiterbewegt werden können, wobei keine genaue Einstellung der Verweilzeit der carbonfaserverstärkten Kunststoffe im Reaktor möglich ist. Aufgrund dessen, dass die Verweilzeit ein wichtiger Prozessparameter der Pyrolyse ist, kann die Qualität der recycelten Fasern stark variieren. Beispielsweise können die Fasern bei einer zu langen Verweilzeit, insbesondere bei anwesendem elementarem Sauerstoff in Folge von partieller Oxidation, beschädigt werden. Die während der Pyrolyse entstehenden Dämpfe werden im Gegenstrom zur Fortbewegungsrichtung der Fasern durch ein einseitig eingestelltes Vakuum befördert. Die Vorrichtung weist ein System zur Verbrennung der durch die Pyrolyse entstehenden brennbaren gasförmigen Kohlenwasserstoffe mit Kettenlängen von C1 bis C5 auf, um die gewünschte Reaktortemperatur zu erreichen. Nachteilig hieran ist, dass durch den Einsatz eines Brenners die Zieltemperatur nur schwer reguliert werden kann, da diese von der leicht schwankenden Zusammensetzung durch nicht konstante Prozessparameter während des Zersetzungsvorgangs entstehenden Pyrolysegase und deren Verbrennungsreaktion abhängig ist.

Die Offenlegungsschrift US 2018/0050908 A1 beschäftigt sich mit der Thematik des Recyclings von kohlenstofffaserverstärkten Kunststoffen. Sie betrifft eine Methode zur Nachbehandlung der dabei entstehenden Pyrolysedämpfe, die durch einen Festbettreaktor mit Temperaturen zwischen 500°C und 1000°C geleitetet werden.

Die DE10 2007 026 748 A1 beschreibt ein kontinuierliches Verfahren und eine Vorrichtung bei dem kohlenstoffhaltige Reststoffe und Strukturen aus faserverstärkten Kunststoffen zerlegt werden. Hier werden die Reststoffe in Reaktionsbehältern eingebracht, die durch einen Tunnelreaktor fortbewegt werden.

Der vorliegenden Erfindung liegt die Aufgabe zugrunde, das Recycling von carbonfaserverstärkten Kunststoffen zu verbessern. Eine weitere Aufgabe der Erfindung kann darin gesehen werden, möglichst alle Materialien der carbonfaserverstärkten Kunststoffe, im Sinne einer möglichst ganzheitlichen, stofflichen Verwertung, zu recyceln bzw. in Zwischenprodukte für die chemische Industrie und faserverarbeitende Unternehmen umzuwandeln.

Die Aufgabe wird durch ein Verfahren zur Aufbereitung von carbonfaserverstärkten Kunststoffen, insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen durch folgende Schritte gelöst:
- Bereitstellen von Teilen aus carbonfaserverstärktem Kunststoff,
- Einbringen der Teile aus carbonfaserverstärktem Kunststoff in eine erste elektrisch beheizbare Förderschnecke,
- Verfahren der Teile aus carbonfaserverstärktem Kunststoff aus dem Einbringbereich der ersten elektrisch beheizbaren Förderschnecke,
- Erwärmen der Teile aus carbonfaserverstärktem Kunststoff auf Temperaturen zwischen 400°C und 800°C, bevorzugt zwischen 600°C und 700°C, wobei die Teile aus carbonfaserverstärktem Kunststoff in einer kontrollierten Atmosphäre gehalten werden, welche frei von elementarem Sauerstoff ist,
- Verweilen der Teile aus carbonfaserverstärktem Kunststoff unter diesen Bedingungen für eine Verweilzeit zwischen 10 min und 120 min, bevorzugt zwischen 30 min und 90 min, besonders bevorzugt zwischen 50 min und 70 min, während die Teile aus carbonfaserverstärktem Kunststoff innerhalb der ersten elektrisch beheizbaren Förderschnecke von dem Einbringbereich zu dem Ausbringbereich verfahren werden,
- Entnahme der bei der Wärmebehandlung entstehenden Pyrolysedämpfe aus der ersten elektrisch beheizbaren Förderschnecke,
- Trennen der Pyrolysedämpfe in Pyrolysegas und Pyrolyseöl, wobei das Pyrolyseöl aus den Pyrolysedämpfen auskondensiert wird,
- Ausbringen der nach der Wärmebehandlung verbleibenden Carbonfasern im Ausbringbereich der ersten elektrisch beheizbaren Förderschnecke.

Durch die unterschiedlichen Zersetzungstemperaturen der Carbonfasern und der Kunststoffmatrix ermöglicht das erfindungsgemäße Verfahren die Trennung der beiden Materialien durch Pyrolyse.

Die erste beheizbare Förderschnecke kann dabei als wellenlose Förderschnecke ausgestaltet werden. Die Heizung der Förderschnecke erfolgt elektrisch. Vorteilhaft können die Prozessparameter, beispielsweise Temperatur und Verweilzeit, in der elektrisch beheizbaren Förderschnecke besonders einfach reguliert werden. Die Bauform und Anordnung der ersten elektrisch beheizbaren Förderschnecke ermöglichen eine genaue Kontrolle über die Position der eingebrachten carbonfaserverstärkten Kunststoffe zwischen den Schneckengängen im Reaktor. Die erste elektrisch beheizbare Förderschnecke kann dabei zum Materialeintrag und/oder zum Materialaustrag ein Schleusensystem aufweisen. Der Eintrag in die erste elektrisch beheizbare Förderschnecke kann beispielsweise über eine Fördereinrichtung und ein vertikales Schleusensystem oberhalb der ersten elektrisch beheizbaren Förderschnecke erfolgen. Dabei werden die einzubringenden carbonfaserverstärkten Kunststoffe in vertikaler Richtung rein gravitativ in die erste elektrisch beheizbare Förderschnecke eingebracht. Begründet durch die klar definierte Atmosphäre des Eintrags mithilfe des Schleusensystems kommt es zu keinen unkontrollierten Eintragungen von (Luft)- Sauerstoff. Es erfolgt keine Verbrennung der bei der Pyrolyse entstehenden Dämpfe, wodurch die Atmosphäre frei von Verbrennungsprodukten ist, die die recycelten Carbonfasern angreifen können. Das Entnehmen der bei der Pyrolyse entstehenden Dämpfe erleichtert zudem die Regulierung der Prozessparameter, beispielsweise Atmosphärenzusammensetzung und Temperatur.

Das direkte Verfahren der in die erste elektrisch beheizbare Förderschnecke eingebrachten carbonfaserverstärkten Kunststoffe aus dem Eintragsbereich des Reaktors hat den Vorteil, dass die direkt entstehenden Pyrolysedämpfe in Folge der Kunststoffzersetzung nicht an dem darüberliegenden Schleusenbereich kondensieren und ein Behindern der beweglichen Teile und des Eintragsbereichs verursachen.

Die Atmosphäre ist während der Pyrolyse frei von elementarem Sauerstoff. Vorteilhaft werden Carbonfasern während der Pyrolyse nicht durch Oxidation beschädigt. Die thermische Zersetzung der Kunststoffmatrix erfolgt, ohne dass die Carbonfasern angegriffen werden.

Dabei können die Verfahrensparameter, beispielsweise Temperatur, Zusammensetzung der Atmosphäre und Verweilzeit, abhängig von den ursprünglich bereitgestellten carbonfaserverstärkten Kunststoffen angepasst werden. Beispielsweise kann ein Polyesterharz bei geringeren Temperaturen zersetzt werden als ein Epoxidharz.

Die recycelten Carbonfasern können dabei 60 Gew. % der ursprünglich eingebrachten carbonfaserverstärkten Kunststoffe entsprechen. Vorteilhaft werden die Carbonfasern fast vollständig wiedergewonnen. Die recycelten Carbonfasern weisen Rückstände, beispielsweise Ruß der Kunststoffmatrix, auf. Vorteilhaft können diese Ablagerungen die Einbringung der Kunststofffasern in eine neue Kunststoffmatrix verbessern.

Vorteilhaft können die in dem Verfahren zur Gewinnung der recycelten Carbonfasern entstehenden Kuppelprodukte entnommen werden. Aus dem bei dem Verfahren entstehenden Pyrolysedampf können die flüchtigen Bestandteile als Pyrolyseöl auskondensiert werden. Die nach der Kondensation verbleibenden Pyrolysegase können separat weiterverarbeitet werden. Der Anteil des Pyrolysegases kann dabei 5 -15 Gew.% des Gewichtes der ursprünglich eingebrachten carbonfaserverstärkten Kunststoffe entsprechen. Vorteilhaft können diese Gase zur Stromerzeugung genutzt werden. Vorteilhaft durch die elektrische Beheizung ist, dass mit Bezug von erneuerbaren Energien und Verstromung der entstehenden Pyrolysegase die Energie- und CO₂-Bilanz signifikant verbessert wird und das Verfahren nachhaltiger und umweltfreundlicher macht.

Das auskondensierte Pyrolyseöl kann dabei 20- 30 Gew. % der ursprünglich eingebrachten carbonfaserverstärkten Kunststoffen entsprechen. In Abhängigkeit der Bestandteile der carbonfaserverstärkten Kunststoffe, können sich weitere Phasen, vorrangig eine zweite flüssige Phase in dem aus den Pyrolysedämpfen entstehenden Kondensat bilden. Diese unterscheiden sich, in ihrer chemischen Zusammensetzung, beispielsweise durch einen höheren Stickstoffanteil, als auch in physikalischen Eigenschaften insbesondere gegenüber dem Pyrolyseöl mit anderer spezifischer Dichte.

Das Pyrolyseöl kann nach der ersten Kondensationsstufe aufbereitet werden, wobei einzelne Flüssigphasen aufkonzentriert werden. Die Phasen, können durch nachträgliche oder im Prozess eingebundene mehrstufige Trennverfahren neben chemischen vorzugsweise durch physikalische Phasenseparation abgetrennt werden und Vorteile für die weitere stoffliche Verwertung des Pyrolyseöls bringen, da sich beispielsweise der Stickstoffanteil hauptsächlich in einer Flüssigphase aufkonzentriert die den geringeren Mengenanteil des gesamten Kondensats ausmacht. Das Pyrolyseöl weist einen hohen Anteil an aromatischen Kohlenwasserstoffen auf und kann als Zwischenprodukt in der chemischen Industrie verwendet werden. Beispielsweise ist eine Anwendung als Erdölersatz oder als Ausgangsstoff für die Herstellung von Industrieruß denkbar.

Der lichte Durchmesser der Förderschnecke kann dabei 10-mal länger als die größte Förderlänge des Materials sein.

Vorteilhaft kann das Verfahren dezentralisiert am Produktionsort von carbonfaserverstärkten Kunststoffen eingesetzt werden. Dabei können fehlerhafte Teile aus carbonfaserverstärktem Kunststoff und Verschnitt direkt vor Ort recycelt werden.

Vorteilhaft ist bei dem Verfahren vorgesehen, dass die nach der Wärmebehandlung verbleibenden Carbonfasern nach dem Ausbringen aus der ersten elektrisch beheizbaren Förderschnecke in eine zweite elektrisch beheizbare Förderschnecke eingebracht werden, umfassend die folgenden Prozessschritte:
- Einstellen einer definierten Atmosphäre der Eintragung aus gewonnenen Carbonfasern der ersten beheizbaren Förderschnecke in einem Zwischenschleusensystem,
- Einbringen der gewonnenen Carbonfasern aus dem Zwischenschleusensystem in den Einbringbereich der zweiten elektrisch beheizbaren Förderschnecke,
- Verfahren der Carbonfasern aus dem Einbringbereich der zweiten elektrisch beheizbaren Förderschnecke,
- Erwärmen der Carbonfasern auf Temperaturen zwischen 500°C und 700°C, bevorzugt zwischen 550°C und 650°C, wobei die Carbonfasern in einer kontrollierten Atmosphäre gehalten werden, welche eine Konzentration zwischen 1 Vol.-% und 20 Vol.-%, bevorzugt zwischen 1 Vol.-% und 10 Vol.-%, besonders bevorzugt zwischen 3 Vol.-% und 5 Vol.-% Sauerstoff enthält,
- Verweilen der Carbonfasern unter diesen Bedingungen für eine Verweilzeit zwischen 10 min und 120 min, bevorzugt zwischen 30 min und 60 min, besonders bevorzugt zwischen 40 min und 50 min, während die Carbonfasern von dem Einbringbereich zu dem Ausbringbereich verfahren werden,
- Ausbringen der nach der Wärmebehandlung verbleibenden Carbonfasern im Ausbringbereich der zweiten elektrisch beheizbaren Förderschnecke,
- Sammeln und Abkühlen der aus der zweiten elektrisch beheizbaren Förderschnecke ausgebrachten Carbonfasern in einer kontrollierten Atmosphäre.

Vorteilhaft können die Rückstände der Kunststoffmatrix auf den Carbonfasern, beispielsweise amorphe Koksablagerungen, in der zweiten elektrisch beheizbaren Förderschnecke entfernt werden. Die Rückstände der Kunststoffmatrix werden unter einem mit elementarem Sauerstoff versetzten Atmosphäre exotherm abgebrannt. Durch den Abbrand der Rückstände der Kunststoffmatrix können die Carbonfasern vereinzelt werden. Vorteilhaft können durch die Durchführung des Abbrandes in einer zweiten elektrisch beheizbaren Förderschnecke die Prozessparameter, beispielsweise Sauerstoffgehalt, Verweilzeit und Temperatur genau geregelt werden. Die Heizung der zweiten elektrisch beheizbaren Förderschnecke erfolgt elektrisch. Dadurch können die Rückstände der Kunststoffmatrix bei weitgehender Erhaltung der Carbonfasern und deren vorteilhaften Eigenschaften abgebrannt werden.

Die Prozessparameter in der zweiten elektrisch beheizbaren Förderschnecke hängen von den Prozessparametern der ersten elektrisch beheizbaren Förderschnecke ab. Beispielsweise entstehen bei einer Pyrolyse bei geringer Temperatur in einer N₂-Atmsphäre in der ersten elektrisch beheizbaren Förderschnecke mehr Rückstände als bei einer Pyrolyse bei hoher Temperatur und CO₂-Atmosphäre.

Es ist auch denkbar, dass die Oberfläche der Carbonfasern in der zweiten elektrisch beheizbaren Förderschnecke oxidiert wird, um die Anhaftung an einer neuen Kunststoffmatrix zu verbessern.

Alternativ kann das Verfahren in einer einzigen elektrisch beheizbaren Förderschnecke durchgeführt werden. Diese elektrische beheizbare Förderschnecke kann dabei in zwei Bereiche aufgeteilt sein, wobei die Prozessparameter der ersten elektrisch beheizbaren Förderschnecke dem ersten Bereich und die Prozessparameter der zweiten elektrisch beheizbaren Förderschnecke dem zweiten Bereich entsprechen. Es versteht sich, dass ein Ausbringen der Carbonfasern aus der ersten elektrisch beheizbaren Förderschnecke und das Einbringen in die zweite elektrisch beheizbare Förderschnecke dem Übergang von dem ersten in den zweiten Bereich der einzigen elektrisch beheizbaren Förderschnecke in dieser Alternative entspricht. Ebenfalls können anstelle des ersten und zweiten Bereichs der einzigen elektrisch beheizbaren Förderschnecke die Prozessparameter innerhalb der gesamten elektrisch beheizbaren Förderschnecke geändert werden.

Dabei ist zweckmäßig, dass die bereitgestellten Teile aus carbonfaserverstärktem Kunststoff mechanisch zerkleinert werden, wobei die Kantenlänge der Teile aus carbonfaserverstärktem Kunststoff zwischen 1 mm und 300 mm beträgt.

Beispielsweise kann das Konfektionieren der carbonfaserverstärkten Kunststoffe auf eine bestimmte Größe oder Form, beispielsweise zu Granulat mit Partikelgrößen zwischen 2 und 8 mm oder Platten mit Kantenlängen bis zu 300 mm erfolgen Vorteilhaft kann die Länge der recycelten Carbonfasern bereits bei der mechanischen Zerkleinerung der carbonfaserverstärkten Kunststoffe variiert werden. In den Prozessschritten zur Gewinnung der recycelten Carbonfasern ändert sich die Länge der Carbonfasern im Wesentlichen nicht.

Die Zerkleinerung kann abhängig von der Orientierung der Carbonfasern innerhalb der carbonfaserverstärkten Kunststoffe erfolgen. Beispielsweise ist es denkbar, die carbonfaserverstärkten Kunststoffe im Fall von unidirektional angeordneten Carbonfasern senkrecht zu den Carbonfasern zu zerkleinern. Vorteilhaft können dadurch recycelte Carbonfasern mit einer möglichst einheitlichen Länge gewonnen werden.

Die Zerkleinerung kann dabei beispielsweise durch Wasserstrahlschneiden, Laserschneiden, Druckzerkleinerung, Schlagzerkleinerung, Reibzerkleinerung, Schneidzerkleinerung oder Prallzerkleinerung erfolgen.

Es ist zur Erfindung gehörig, dass die kontrollierte Atmosphäre in der ersten elektrisch beheizbaren Förderschnecke hauptsächlich aus N₂, CO₂ oder H₂O oder einer Mischung daraus besteht.

Abhängig von der Atmosphäre und der Temperatur stellt sich je nach eingesetztem Prozessgas spätestens beim Einsetzten der Zersetzungsvorgänge ein Boudouard-Gleichgewicht ein. Die Gasatmosphäre hat dabei Einfluss auf die Menge und Zusammensetzung der nach der Pyrolyse in der ersten elektrisch beheizbaren Förderschnecke auf der Carbonfaseroberfläche verbleibenden Rückstände. Die Rückstände können beispielsweise bei der Verwendung einer CO₂-Atmosphäre im Vergleich zu einer N₂-Atmosphäre reduziert werden. Ebenfalls kann eine Wasserdampfatmosphäre mit N₂ oder CO₂ als Trägergas verwendet werden.

Vorteilhaft werden die Carbonfasern bei Erwärmung in dieser Atmosphäre nicht oder nur im geringen Umfang oxidiert. Sie behalten im Wesentlichen ihre mechanischen Eigenschaften.

Eine vorteilhafte Ausgestaltung der Erfindung sieht vor, dass die Temperatur in der zweiten elektrisch beheizbaren Förderschnecke geringer ist als in der ersten elektrisch beheizbaren Förderschnecke.

Die Temperatur in der zweiten elektrisch beheizbaren Förderschnecke kann dabei um 25°C, bevorzugt um 40°C, besonders bevorzugt um 50°C geringer sein als in der ersten elektrisch beheizbaren Förderschnecke.

Vorteilhaft werden durch die niedrigeren Temperaturen in der zweiten elektrisch beheizbaren Förderschnecke die Rückstände der Kunststoffmatrix besonders schonend entfernt, ohne die Carbonfasern zu schädigen.

Schließlich ist es zur Erfindung gehörig, dass die carbonfaserverstärkten Kunststoffe in den elektrisch beheizbaren Förderschnecken semi-kontinuierlich mit einer vorgegebenen Taktung verfahren werden. Dabei können die carbonfaserverstärkten Kohlenstoffe schubweise in das Schleusensystem eingebracht werden.

Vorteilhaft ist dadurch ein semi-kontinuierlicher Prozess möglich. Alternativ kann das Verfahren auch in Chargen durchgeführt werden.

Schließlich wird die Aufgabe auch durch eine Vorrichtung zur Aufbereitung von carbonfaserverstärkten Kunststoffen (CFK), insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen dadurch gelöst, dass die Vorrichtung eine erste elektrisch beheizbare Förderschnecke und eine zweite elektrisch beheizbare Förderschnecke aufweist, wobei in der ersten elektrisch beheizbaren Förderschnecke und der zweiten elektrisch beheizbaren Förderschnecke jeweils eine kontrollierte Temperatur und Atmosphäre einstellbar ist, wobei zwischen der ersten elektrisch beheizbaren Förderschnecke und der zweiten beheizbaren Förderschnecke eine Zwischenschleuse vorgesehen ist, wobei die nach der Wärmebehandlung in der ersten elektrisch beheizbaren Förderschnecke verbleibenden Carbonfasern über die Zwischenschleuse in die zweite elektrisch beheizbare Förderschnecke verbringbar sind, wobei die Zwischenschleuse so ausgelegt ist, dass ein Vermischen der Atmosphäre der ersten elektrisch beheizbaren Förderschnecke und der Atmosphäre der zweiten elektrisch beheizbaren Förderschnecke verhindert wird, wobei die ersten elektrisch beheizbaren Förderschnecke Mittel zum Ausleiten von Pyrolysedampf aufweist, wobei die Vorrichtung ein oder mehrere Mittel zum Kondensieren von Pyrolysedampf, zur Aufbereitung und zur Aufbewahrung von anfallendem Kondensat aufweist, wobei die Vorrichtung über ein System zur gezielten Ableitung gasförmiger Bestandteile und Filtereinrichtungen aufweist.

Im Folgenden wird ein Ausführungsbeispiel der Erfindung anhand einer Zeichnung näher erläutert.

Es zeigen
Fig. 1 eine schematische Darstellung einer Vorrichtung zur Durchführung des erfindungsgemäßen Verfahrens
Fig. 2 ein Prozessdiagramm eines erfindungsgemäßen Verfahrens.

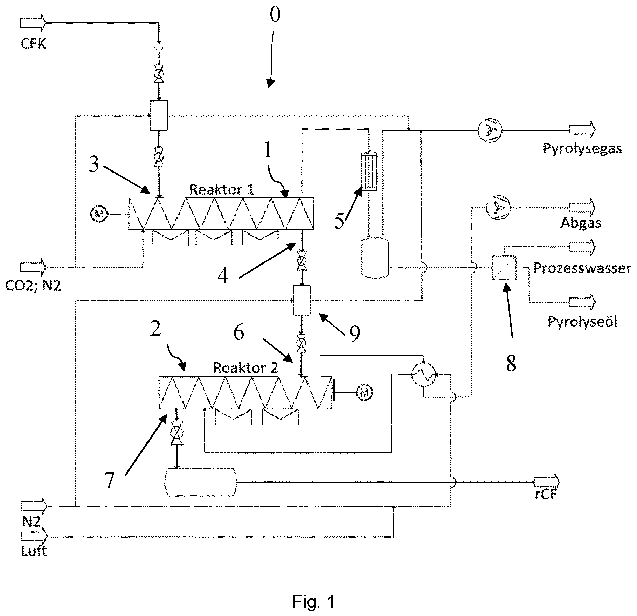

In Fig. 1 wird eine Vorrichtung (0) zur Durchführung des erfindungsgemäßen Verfahrens dargestellt. Die carbonfaserverstärkten Kunststoffe werden in eine erste elektrisch beheizbaren Förderschnecke 1 über ein Schleusensystem zur gezielten Atmosphäreeinstellung des Inputmaterials eingebracht. Die carbonfaserverstärkten Kunststoffteile können dabei mechanisch, beispielsweise durch Wasserstrahlschneiden oder Laserschneiden, zerkleinert sein. Die Teile aus carbonfaserverstärktem Kunststoff werden von dem Einbringbereich 3 der ersten elektrisch beheizbare Förderschnecke 1 zu dem Ausbringbereich 4 der ersten elektrisch beheizbaren Förderschnecke 1 verfahren.

Die Teile aus carbonfaserverstärktem Kunststoffen werden durch elektrische Heizelemente auf Temperaturen zwischen 400°C und 800°C, bevorzugt zwischen 600°C und 700°C erhitzt. Die Teile aus carbonfaserverstärktem Kunststoff werden in der ersten elektrisch beheizbaren Förderschnecke in einer kontrollierten Atmosphäre gehalten, welche frei von elementarem Sauerstoff ist. Dazu kann CO₂, N₂, Wasserdampf oder eine Mischung daraus in die erste elektrisch beheizbare Förderschnecke 1 geleitet werden. Die Teile aus carbonfaserverstärktem Kunststoff verweilen unter diesen Bedingungen für eine Verweilzeit zwischen 10 min und 120 min, bevorzugt zwischen 30 min und 90 min, besonders bevorzugt zwischen 50 min und 70 min. Dabei wird die Kunststoffmatrix der carbonfaserverstärkten Kunststoffe zersetzt. Die bei dieser Zersetzung entstehenden Pyrolysedämpfe werden aus der ersten elektrisch beheizbaren Förderschnecke entnommen. In einer Vorrichtung zur Kondensation der flüchtigen Bestandteile des Pyrolysedampfs 5 wird das Pyrolysegas von dem auskondensierten Pyrolyseöl getrennt. Die Vorrichtung zur Kondensation der flüchtigen Bestandteile des Pyrolysedampfs 5 kann ein Rohrbündelwärmetauscher, ein Quench oder ein ähnliches System sein. Nach der ersten Kondensationsstufe kann eine zweite Kondensationsstufe beziehungsweise Aufbereitungsstufe 8 zum Erhalt unterschiedlicher Flüssigphasen, in Reihe angeordnet sein. Das Pyrolysegas kann zur Verbesserung der Energiebilanz des Prozesses zu elektrischer Energie umgewandelt werden. Das Pyrolyseöl kann als Ausgangsstoff für die chemische Industrie verwendet werden.

Im Ausbringbereich 4 der ersten elektrisch beheizbaren Förderschnecke 1 werden die nach der Wärmebehandlung verbleibenden Carbonfasern ausgebracht. Die Carbonfasern können noch Rückstände der Kunststoffmatrix aufweisen. Die Menge und Beschaffenheit der Rückstände der Kunststoffmatrix hängen von dem Kunststoffmatrixmaterial und den Prozessparametern in der ersten elektrisch beheizbaren Förderschnecke ab.

Die Rückstände der Kunststoffmatrix können in einer zweiten elektrisch beheizbaren Förderschnecke 2 entfernt werden. Dazu werden die aus der ersten elektrisch beheizbaren Förderschnecke 1 gewonnenen Carbonfasern in einer Zwischenschleuse 9 mit einer definierten Atmosphäre beaufschlagt. Die Carbonfasern werden anschließend in einer zweiten elektrisch beheizbaren Förderschnecke 2 von einem Einbringbereich 6 zu einem Ausbringbereich 7 verfahren. Die Carbonfasern werden in der zweiten elektrisch beheizbaren Förderschnecke auf Temperaturen zwischen 500°C und 700°C, bevorzugt zwischen 550°C und 650°C erhitzt. Die Carbonfasern werden in der zweiten elektrisch beheizbaren Förderschnecke 2 in einer kontrollierten Atmosphäre, welche eine Konzentration zwischen 1 Vol.-% und 20 Vol.-% bevorzugt zwischen 1 Vol.-% und 10 Vol.-%, besonders bevorzugt zwischen 3 Vol.-% und 5 Vol.-% Sauerstoff aufweist, gehalten. Die Atmosphäre kann dabei durch Einbringen von N₂ und Umgebungsluft reguliert werden. Die Carbonfasern verweilen unter diesen Bedingungen für eine Verweilzeit zwischen 10 min und 120 min, bevorzugt zwischen 30 min und 60 min, besonders bevorzugt zwischen 40 min und 50 min, während die Carbonfasern von dem Einbringbereich 6 zu dem Ausbringbereich 7 verfahren werden. Die bei dem Abbrand der Matrixrückstände entstehenden Abgase können aus der zweiten elektrisch beheizbaren Förderschnecke 2 abgeleitet werden. Die nach der Wärmebehandlung verbleibenden Carbonfasern werden im Ausbringbereich 7 der zweiten elektrisch beheizbaren Förderschnecke 2 ausgebracht. Diese recycelten Carbonfasern können zu neuen Produkten oder Halbzeugen weiterverarbeitet werden.

Das Verfahren zur Aufbereitung von carbonfaserverstärkten Kunststoffen, insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen kann semi-kontinuierlich oder in Chargen durchgeführt werden.

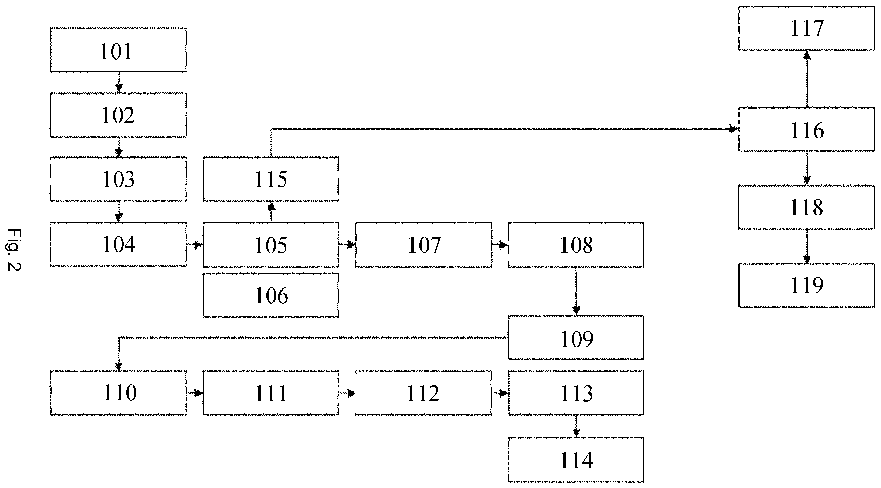

In Fig. 2 ist ein beispielhaftes Prozessdiagramm des erfindungsgemäßen Verfahrens dargestellt. Das Verfahren umfasst die folgenden Schritte:
- Vorkonfektionierung von carbonfaserverstärkten Kunststoffabfällen 101, bei der Vorkonfektionierung werden die carbonfaserverstärkten Kunststoffabfälle beispielsweise auf eine Kantenlänge zwischen 1 mm und 300 mm zerkleinert,
- Verdrängen von O₂ mit Inertgas in einer Eintragungsschleuse 102,
- Einbringen der carbonfaserverstärkten Kunststoffabfälle in den Einbringbereich einer ersten elektrisch beheizten Förderschnecke 103,
- Verfahren der carbonfaserverstärkten Kunststoffe aus dem Einbringbereich der ersten elektrisch beheizten Förderschnecke 104,
- Erwärmen des carbonfaserverstärkten Kunststoffs auf eine Temperatur zwischen 600°C und 700°C unter O₂ Ausschluss 105, wobei das Erwärmen der carbonfaserverstärkten Kunststoffe für 30 bis 90 Minuten bei atmosphärischen Druckverhältnissen erfolgt 106,
- Kontinuierliche Entnahme der entstehenden Pyrolysedämpfe aus der ersten elektrisch beheizten Förderschnecke 115,
- Kondensieren der Pyrolysedämpfe 116,
- Verstromung der gasförmigen Bestandteile der Pyrolysedämpfe 117,
- Nachbehandlung des auskondensierten Pyrolyseöls durch Phasenseparation 118, wobei einzelne Flüssigphasen aufkonzentriert werden können. Die Phasen, können durch nachträgliche oder im Prozess eingebundene mehrstufige Trennverfahren neben chemischen vorzugsweise durch physikalische Phasenseparation abgetrennt werden und Vorteile für die weitere stoffliche Verwertung des Pyrolyseöls bringen, da sich beispielsweise der Stickstoffanteil hauptsächlich in einer Flüssigphase aufkonzentriert die den geringeren Mengenanteil des gesamten Kondensats ausmacht,
- Lagerung des auskondensierten Pyrolyseöls 119, wobei die einzelnen Flüssigphasen beispielsweise getrennt nach ihrem Stickstoffanteil getrennt gelagert werden können,
- Getaktetes Verfahren der carbonfaserverstärkten Kunststoffe aus dem Einbringbereich in den Ausbringbereich der ersten elektrisch beheizten Förderschnecke 107,
- Ausbringen der pyrolysierten Carbonfasern in ein Zwischenschleusensystem 108,
- Austreiben restlicher Pyrolysedämpfe und Spülen der pyrolysierten Carbonfasern 109,
- Einbringen der Carbonfasern in eine zweite elektrisch beheizte Förderschnecke 110,
- Verfahren der Carbonfasern aus dem Einbringbereich der zweiten elektrisch beheizten Förderschnecke 111,
- Erwärmen der Carbonfasern auf eine Temperatur zwischen 500°C bis 650°C bei 1 Vol.-% bis 21 Vol.-% O₂ 112,
- Ausbringen der nach der Wärmebehandlung verbleibenden Carbonfasern 113,
- Sammeln und Abkühlen der wärmebehandelten Carbonfasern 114,

## Patentansprüche

1. Verfahren zur Aufbereitung von carbonfaserverstärkten Kunststoffen (CFK), insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen, umfassend die folgenden Schritte:
• Bereitstellen von Teilen aus carbonfaserverstärktem Kunststoff,
• Einbringen der Teile aus carbonfaserverstärktem Kunststoff in eine erste elektrisch beheizbare Förderschnecke (1),
• Verfahren der Teile aus carbonfaserverstärktem Kunststoff aus dem Einbringbereich (3) der ersten elektrisch beheizbaren Förderschnecke (1),
• Erwärmen der Teile aus carbonfaserverstärktem Kunststoff auf Temperaturen zwischen 400°C und 800°C, bevorzugt zwischen 600°C und 700°C, wobei die Teile aus carbonfaserverstärktem Kunststoff in einer kontrollierten Atmosphäre gehalten werden, welche frei von elementarem Sauerstoff ist,
• Verweilen der Teile aus carbonfaserverstärktem Kunststoff unter diesen Bedingungen für eine Verweilzeit zwischen 10 min und 120 min, bevorzugt zwischen 30 min und 90 min, besonders bevorzugt zwischen 50 min und 70 min, während die Teile aus carbonfaserverstärktem Kunststoff innerhalb der ersten elektrisch beheizbaren Förderschnecke (1) von dem Einbringbereich (3) zu dem Ausbringbereich (4) verfahren werden,
• Entnahme der bei der Wärmebehandlung entstehenden Pyrolysedämpfe aus der ersten elektrisch beheizbaren Förderschnecke (1),
• Trennen der Pyrolysedämpfe in Pyrolysegas und Pyrolyseöl, wobei das Pyrolyseöl aus den Pyrolysedämpfen auskondensiert wird,
• Ausbringen der nach der Wärmebehandlung verbleibenden Carbonfasern im Ausbringbereich (4) der ersten elektrisch beheizbaren Förderschnecke (1).

2. Verfahren gemäß Anspruch 1, **dadurch gekennzeichnet, dass** die nach der Wärmebehandlung verbleibenden Carbonfasern nach dem Ausbringen aus der ersten elektrisch beheizbaren Förderschnecke (1) in eine zweite elektrisch beheizbare Förderschnecke (2) eingebracht werden, umfassend die folgenden Prozessschritte:
• Einstellen einer definierten Atmosphäre der Eintragung aus gewonnenen Carbonfasern der ersten elektrisch beheizbaren Förderschnecke (1) in einem Zwischenschleusensystem (9),
• Einbringen der gewonnenen Carbonfasern aus dem Zwischenschleusensystem (9) in den Einbringbereich (6) der zweiten elektrisch beheizbaren Förderschnecke (2),
• Verfahren der Carbonfasern aus dem Einbringbereich (6) der zweiten elektrisch beheizbaren Förderschnecke (2), Erwärmen der Teile der Carbonfasern auf Temperaturen zwischen 500°C und 700°C, bevorzugt zwischen 550°C und 650°C, wobei die Carbonfasern in einer kontrollierten Atmosphäre gehalten werden, welche eine Konzentration zwischen 1 Vol.-% und 20 Vol.-% bevorzugt zwischen 1 Vol.-% und 10 Vol.-%, besonders bevorzugt zwischen 3 Vol.-% und 5 Vol.-% Sauerstoff enthält,
• Verweilen der Carbonfasern unter diesen Bedingungen für eine Verweilzeit zwischen 10 min und 120 min, bevorzugt zwischen 30 min und 60 min, besonders bevorzugt zwischen 40 min und 50 min, während die Carbonfasern von dem Einbringbereich (6) zu dem Ausbringbereich (7) verfahren werden,
• Ausbringen der nach der Wärmebehandlung verbleibenden Carbonfasern im Ausbringbereich (7) der zweiten elektrisch beheizbaren Förderschnecke (2),
• Sammeln und Abkühlen der aus der zweiten elektrisch beheizbaren Förderschnecke (2) ausgebrachten Carbonfasern in einer kontrollierten Atomosphäre.

3. Verfahren gemäß einem der vorangegangenen Ansprüche, **dadurch gekennzeichnet, dass** die bereitgestellten Teile aus carbonfaserverstärktem Kunststoff mechanisch zerkleinert werden, wobei die Kantenlänge der Teile aus carbonfaserverstärktem Kunststoff zwischen 1 mm und 300 mm beträgt.

4. Verfahren gemäß einem der vorangegangenen Ansprüche, **dadurch gekennzeichnet, dass** die kontrollierte Atmosphäre in der ersten elektrisch beheizbaren Förderschnecke (1) hauptsächlich aus N₂, CO₂ oder H₂O oder einer Mischung daraus besteht.

5. Verfahren gemäß einem der Ansprüche 2 bis 4, **dadurch gekennzeichnet, dass** die Temperatur in der zweiten elektrisch beheizbaren Förderschnecke (2) geringer ist als in der ersten elektrisch beheizbaren Förderschnecke (1) ist.

6. Verfahren gemäß einem der vorangegangenen Ansprüche, **dadurch gekennzeichnet, dass** die carbonfaserverstärkten Kunststoffe in den elektrisch beheizbaren Förderschnecken (1, 2) semi-kontinuierlich mit einer vorgegebenen Taktung verfahren werden.

7. Vorrichtung zur Aufbereitung von carbonfaserverstärkten Kunststoffen (CFK), insbesondere zur Aufbereitung der Carbonfasern von carbonfaserverstärkten Kunststoffen und zur Gewinnung von Pyrolysegas und Pyrolyseöl aus den carbonfaserverstärkten Kunststoffen, **dadurch gekennzeichnet, dass** die Vorrichtung (0) eine erste elektrisch beheizbare Förderschnecke (1) und eine zweite elektrisch beheizbare Förderschnecke (2) aufweist, wobei in der ersten elektrisch beheizbaren Förderschnecke (1) und der zweiten elektrisch beheizbaren Förderschnecke (2) jeweils eine kontrollierte Temperatur und Atmosphäre einstellbar ist, wobei zwischen der ersten elektrisch beheizbaren Förderschnecke (1) und der zweiten beheizbaren Förderschnecke (2) eine Zwischenschleuse vorgesehen ist, wobei die nach der Wärmebehandlung in der ersten elektrisch beheizbaren Förderschnecke (1) verbleibenden Carbonfasern über die Zwischenschleuse in die zweite elektrisch beheizbare Förderschnecke (2) verbringbar sind, wobei die Zwischenschleuse so ausgelegt ist, dass ein Vermischen der Atmosphäre der ersten elektrisch beheizbaren Förderschnecke (1) und der Atmosphäre der zweiten elektrisch beheizbaren Förderschnecke (2) verhindert wird, wobei die erste elektrisch beheizbare Förderschnecke (1) Mittel zum Ausleiten von Pyrolysedampf aufweist, wobei die Vorrichtung (0) ein oder mehrere Mittel (5, 8) zum Kondensieren von Pyrolysedampf, zur Aufbereitung und zur Aufbewahrung von anfallendem Kondensat aufweist, wobei die Vorrichtung über ein System zur gezielten Ableitung gasförmiger Bestandteile und Filtereinrichtungen aufweist.
